# EUROPÄISCHE PATENTSCHRIFT

(11) **EP 0 739 952 B1**
(45) Veröffentlichungstag und Bekanntmachung des Hinweises auf die Patenterteilung: **16.08.2001**
(21) Anmeldenummer: 96810241.8
(22) Anmeldetag: 17.04.1996
(51) Int. Cl.: C09B 67/22, D06P 1/04

(54) **Azofarbstoffmischungen und deren Verwendung**
Azo dyestuff mixtures and their use
Mélanges de colorants azoiques et leur utilisation

(30) Priorität: 26.04.1995 CH 119495
(43) Veröffentlichungstag der Anmeldung: 30.10.1996
(73) Patentinhaber: Ciba Specialty Chemicals Holding Inc., 4057 Basel (CH)
(72) Erfinder: Jordine, Guido, Dr., 79098 Freiburg (DE)

(56) Entgegenhaltungen:
- CH-A- 627 485
- GB-A- 1 466 069

## Beschreibung

Die vorliegende Erfindung betrifft Mischungen von Azofarbstoffen sowie deren Verwendung zum Färben oder Bedrucken von stickstoffhaltigen oder hydroxygruppenhaltigen Fasermaterialien.

Aus der GB-A-1 466 069 sind wasserlösliche, mindestens drei Phenylreste enthaltende Monoazofarbstoffe, bekannt.

Die CH-A-627 485 offenbart die Herstellung von sulfonsäuregruppenfreien Dispersionsazofarbstoffen, welche mindestens drei Phenylreste enthalten.

Die der vorliegenden Erfindung zugrunde liegende Aufgabe war es, Farbstoffmischungen zu finden, welche zum Färben oder Bedrucken von stickstoffhaltigen oder hydroxygruppenhaltigen Fasermaterialien, insbesondere von natürlichen oder synthetischen Polyamidfasermaterialien, geeignet sind, gute Echtheitseigenschaften sowie insbesondere eine gute Löslichkeit und gute Druckpastenstabilität aufweisen.

Es wurde nun gefunden, dass die nachstehenden Farbstoffmischungen diesen Anforderungen weitgehend genügen.

Gegenstand der vorliegenden Erfindung sind Farbstoffmischungen, welche dadurch gekennzeichnet sind, dass sie mindestens einen Farbstoff der Formel 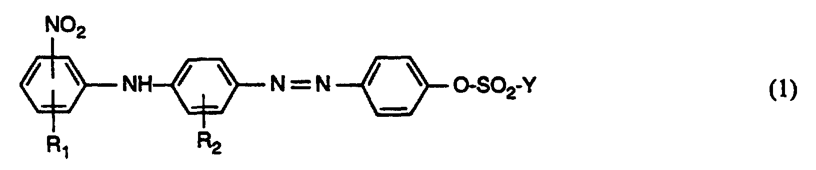 zusammen mit mindestens einem Farbstoff der Formel 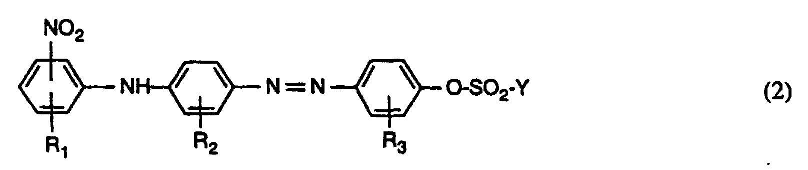 enthalten, worin
R₁ und R₂ unabhängig voneinander Wasserstoff, C₁-C₄-Alkyl, C₁-C₄-Alkoxy, C₂-C₄-Alkanoylamino, Halogen oder Sulfo bedeuten,
R₃ C₁-C₄-Alkyl, C₁-C₄-Alkoxy, C₂-C₄-Alkanoylamino, Halogen oder Sulfo und
Y C₁-C₄-Alkyl oder gegebenenfalls durch C₁-C₄-Alkyl, C₁-C₄-Alkoxy, C₂-C₄-Alkanoylamino, Halogen oder Sulfo substituiertes Phenyl oder Naphthyl ist,
wobei die Farbstoffmischungen, bezogen auf die Gesamtmenge der Farbstoffe der Formeln (1) und (2), mindestens 10 Gewichtsprozent eines oder mehrerer Farbstoffe der Formel (1) enthalten.

Als C₁-C₄-Alkyl kommen für R₁, R₂ und R₃ sowie als entsprechender Substituent des Restes Y Methyl, Aethyl, Propyl, Isopropyl, Butyl, Isobutyl, sek.-Butyl oder tert.-Butyl in Betracht. Bevorzugt sind hierbei Methyl oder Aethyl, insbesondere Methyl.

Als C₁-C₄-Alkoxy kommt für R₁, R₂ und R₃ sowie als entsprechender Substituent des Restes Y beispielsweise Methoxy, Aethoxy, Propoxy, Isopropoxy, Butoxy, sek.-Butoxy, Isobutoxy oder tert.-Butoxy, insbesondere Methoxy, in Betracht.

Als C₂-C₄-Alkanoylamino kommt für R₁, R₂ und R₃ sowie als entsprechender Substituent des Restes Y z.B. Propionylamino oder insbesondere Acetylamino in Betracht.

Als Halogen kommen für R₁, R₂ und R₃ sowie als entsprechender Substituent des Restes Y beispielsweise Fluor oder Brom und insbesondere Chlor in Betracht.

R₁ ist vorzugsweise Wasserstoff oder Sulfo, insbesondere Sulfo.

R₂ ist vorzugsweise Wasserstoff, C₁-C₄-Alkyl, C₁-C₄-Alkoxy oder Sulfo, insbesondere Wasserstoff oder Sulfo. Bevorzugt ist R₂ Wasserstoff.

R₃ ist vorzugsweise C₁-C₄-Alkyl, C₁-C₄-Alkoxy oder Sulfo, insbesondere C₁-C₄-Alkyl oder Sulfo. Bevorzugt ist R₃ C₁-C₄-Alkyl, vorzugsweise Methyl oder Aethyl, insbesondere Methyl.

Bei dem Rest Y handelt es sich vorzugsweise um C₁-C₄-Alkyl- oder Phenylreste, insbesondere um Phenylreste, welche wie oben angegeben substituiert sein können. Als Substituenten des Restes Y kommen vorzugsweise Wasserstoff, C₁-C₄-Alkyl, C₁-C₄-Alkoxy oder Sulfo, insbesondere C₁-C₄-Alkyl, in Betracht. Bevorzugte Substituenten des Restes Y sind Methyl oder Aethyl, vorzugsweise Methyl.

Besonders bevorzugt ist Y gegebenenfalls durch C₁-C₄-Alkyl, C₁-C₄-Alkoxy oder Sulfo, insbesondere durch C₁-C₄-Alkyl, substituiertes Phenyl. Ganz besonders bevorzugt ist Y gegebenenfalls durch Methyl oder Aethyl, vorzugsweise Methyl, substituiertes Phenyl.

In den Farbstoffen der Formeln (1) und (2) können die jeweils gleich bezeichneten Substituenten identische oder voneinander verschiedene Bedeutungen haben, vorzugsweise haben sie identische Bedeutungen.

Die Farbstoffe der Formeln (1) und (2) enthalten vorzugsweise mindestens eine Sulfogruppe, insbesondere nur eine oder zwei Sulfogruppen. Bevorzugt enthalten sie jeweils nur eine Sulfogruppe.

Bevorzugt sind Farbstoffmischungen, worin R₁ Sulfo, R₂ Wasserstoff, R₃ C₁-C₄-Alkyl, vorzugsweise Methyl oder Aethyl und insbesondere Methyl, und Y gegebenenfalls wie oben angegeben substituiertes, insbesondere durch C₁-C₄-Alkyl substituiertes, Phenyl ist.

Besonders bevorzugt sind Farbstoffmischungen, welche als Farbstoff der Formel (1) einen Farbstoff der Formel 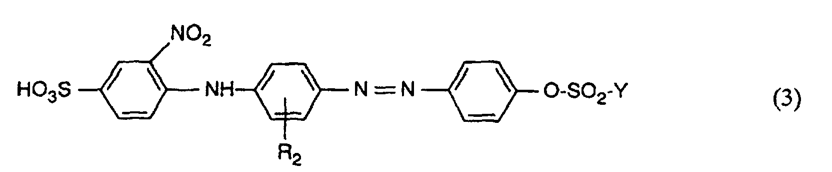 und als Farbstoff der Formel (2) einen Farbstoff der Formel 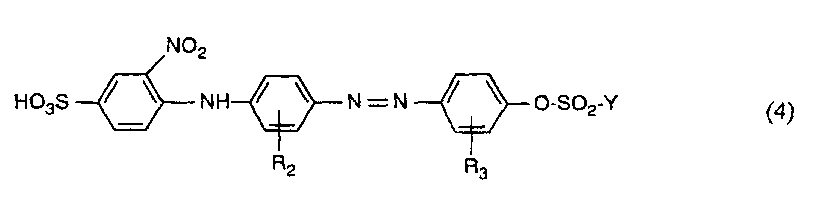 enthalten. Für die Reste R₂, R₃ und Y gelten hierbei die oben angegebenen Bedeutungen und Bevorzugungen.

Ganz besonders bevorzugt sind Farbstoffmischungen, welche mindestens einen Farbstoff der Formel 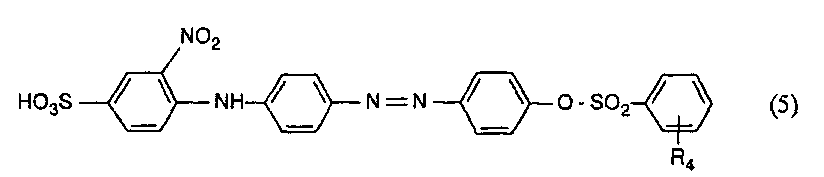 zusammen mit mindestens einem Farbstoff der Formel 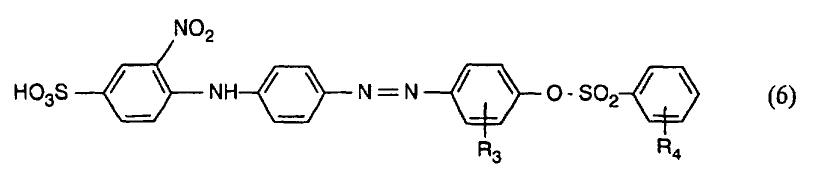 enthalten, wobei für R₃ die oben angegebenen Bedeutungen und Bevorzugungen gelten und R₄ Wasserstoff, C₁-C₄-Alkyl, C₁-C₄-Alkoxy, C₂-C₄-Alkanoylamino, Halogen oder Sulfo, insbesondere C₁-C₄-Alkyl, ist. Vorzugsweise bedeuten hierbei R₃ und R₄ C₁-C₄-Alkyl, insbesondere Methyl. Der Rest R₄ ist vorzugsweise in para-Stellung, relativ zur Gruppe der Formel -OSO₂-, gebunden.

Von besonderem Interesse sind Farbstoffmischungen, welche, bezogen auf die Gesamtmenge der Farbstoffe der Formeln (1) und (2), mindestens 20 Gewichtsprozent, vorzugsweise mindestens 30 Gewichtsprozent und insbesondere mindestens 40 Gewichtsprozent, eines oder mehrerer Farbstoffe der Formel (1) enthalten.

Farbstoffe der Formeln (1) und (2) können beispielsweise durch Umsetzung einer Verbindung der Formel 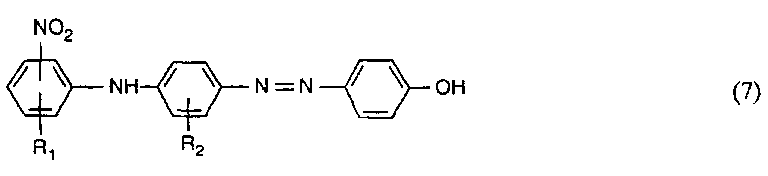 oder 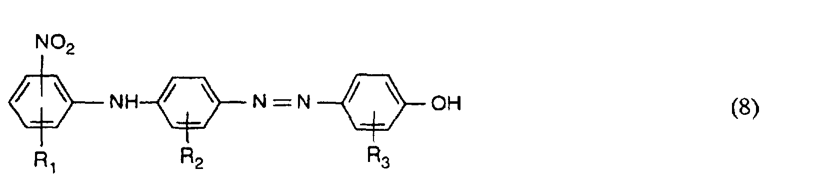 mit einer Verbindung der Formel

Hal-SO₂-Y (9)

erhalten werden, wobei für R₁, R₂, R₃ und Y die oben angegebenen Bedeutungen gelten und Hal Halogen, insbesondere Chlor, bedeutet.

Die Umsetzung der Verbindung der Formel (7) oder (8) mit einer Verbindung der Formel (9) erfolgt z.B. in wässrigem Medium, bei einem pH-Wert von beispielsweise 9 bis 12 und einer Temperatur von z.B. 60 bis 100°C. Während der Reaktion freiwerdende Säure wird vorzugsweise durch säurebindende Mittel, wie z.B. Natriumhydroxid, abgefangen, wobei der pH vorteilhafterweise oberhalb von einem Wert von 5, insbesondere einem Wert von 6, gehalten wird.

Werden bei der Umsetzung gleichzeitig Verbindungen der Formeln (7) und (8) in einem entsprechendem Mengenverhältnis eingesetzt, so können auch direkt Mischungen der Farbstoffe der Formeln (1) und (2) erhalten werden.

Die Verbindungen der Formeln (7), (8) und (9) sind bekannt oder können in Analogie zu bekannten Verbindungen hergestellt werden.

Die erfindungsgemässe Farbstoffmischungen können weiterhin auch durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen z.B. durch Zerstäubungstrocknung der wässrigen Farbstoffmischungen hergestellt werden.

Die Farbstoffe der Formeln (1) und (2) liegen in der Regel entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffmischungen können weitere Zusätze, wie z.B. Kochsalz oder Dextrin, enthalten.

Die erfindungsgemässen Farbstoffmischungen können in den üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die erfindungsgemässen Farbstoffmischungen sind auch zum Färben aus Kurzflotten, wie z.B. bei Kontinuefärbeverfahren oder diskontinuierlichen und kontinuierlichen Schaumfärbeverfahren, geeignet.

Die erfindungsgemässen Farbstoffmischungen zeichnen sich insbesondere durch gutes Aufziehverhalten, gute Löslichkeit und Druckpastenstabilität sowie durch gute Kombinierbarkeit aus. Weiterhin weisen die erfindungsgemässen Farbstoffmischungen eine gute Hartwasserstabilität auf.

Es werden egale Färbungen mit guten Allgemeinechtheiten, insbesondere guter Reib-, Nass-, Nassreib- und Lichtechtheit erhalten.

Die erfindungsgemässen Farbstoffmischungen eignen sich zum Färben oder Bedrucken von natürlichen Polyamidmaterialien, wie z.B. Wolle, oder insbesondere von synthetischen Polyamidmaterialien, wie z.B. Polyamid 6 oder Polyamid 6.6, oder von Seide und sind geeignet zum Färben oder Bedrucken von Mischgeweben oder -Garnen aus Wolle und synthetischem Polyamid.

Das genannte Material, insbesondere Textilmaterial, kann dabei in den verschiedensten Verarbeitungsformen vorliegen, wie z.B. als Faser, Garn, Gewebe oder Gewirke und insbesondere in Form von Teppichen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 105 Teile einer Verbindung der Formel 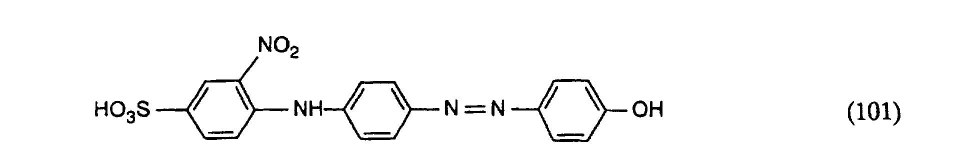 und 105 Teile einer Verbindung der Formel 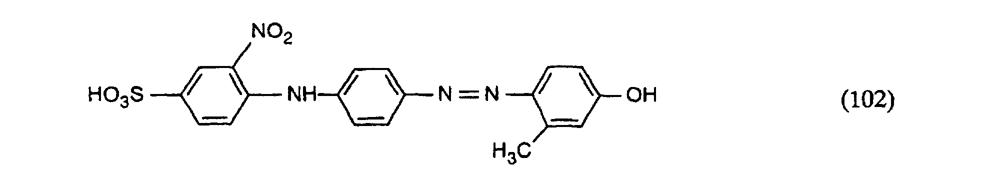 werden in 4200 Teilen Wasser eingetragen, auf eine Temperatur von 80°C erwärmt und mit konzentrierter Natronlauge auf einen pH-Wert von 11 gestellt. Anschliessend werden innerhalb von 15 Minuten portionsweise 165 Teile Tosylchlorid zugegeben, wobei der pH-Wert absinkt. Bei einem Wert von 6,5 wird der pH mit konzentrierter Natronlauge konstant gehalten und es wird 4 Stunden bei einer Temperatur von 80°C gerührt. Dann werden 10 Volumenprozent Natriumchlorid zugegeben und das Reaktionsgemisch wird auf eine Temperatur von 50°C abgekühlt. Das erhaltene Produkt wird auf einer Nutsche abgesaugt, mit 1000 Teilen einer wässrigen Natriumchloridlösung (10%) sowie 1000 Teilen einer wässrigen Natriumchloridlösung (5%) gewaschen und dann bei einer Temperatur von 60°C getrocknet. Man erhält 285 Teile einer Mischung, welche die Farbstoffe der Formeln 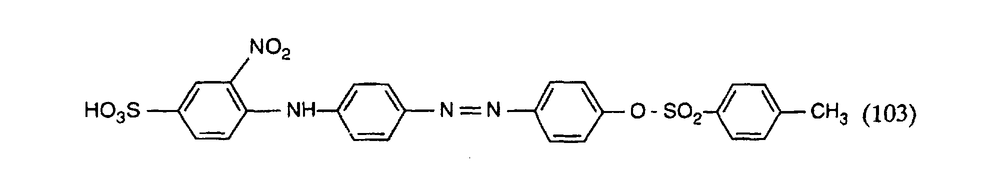 und 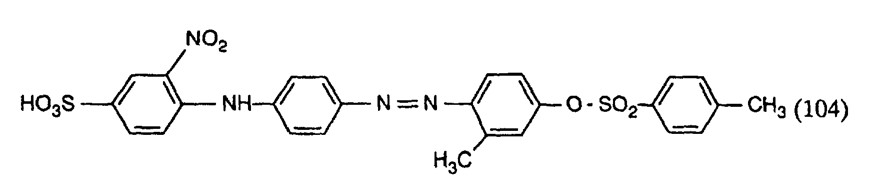 im Gewichtsverhältnis von ca. 1:1 enthält. Die erhaltene Farbstoffmischung der Farbstoffe der Formeln (103) und (104) färbt Wolle oder synthetisches Polyamidfasermaterial in gelben Farbtönen.

Beispiel 2: Verfährt man wie in Beispiel 1 angegeben, verwendet jedoch anstelle von 105 Teilen einer Verbindung der Formel (102) 105 Teile einer Verbindung der Formel 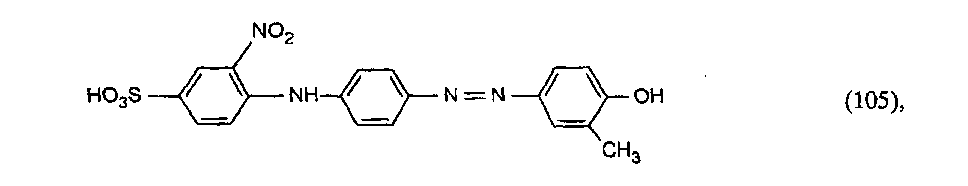 so erhält man eine analoge Farbstoffmischung, welche Wolle oder synthetisches Polyamidfasermaterial in gelben Farbtönen färbt.

Beispiele 3 bis 12: Verfährt man wie in Beispiel 1 oder 2 angegeben, verwendet jedoch die Verbindungen der Formeln (101) und (102) bzw. die Verbindungen der Formeln (101) und (105) in einem Gewichtsverhältnis von 1:9, 2:8, 3:7, 4:6 oder 6:4, so erhält man analoge Farbstoffmischungen, welche Wolle oder synthetisches Polyamidfasermaterial in gelben Farbtönen färben.

### Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil der Farbstoffmischung gemäss Beispiel 1 beträgt 1 %, bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

### Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil der Farbstoffmischung gemäss Beispiel 1 beträgt 1 %, bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

### Färbevorschrift III

Man färbt 10 Teile Wollstück in 500 Teilen einer wässrigen Flotte. Bezogen auf das Fasergewicht enthält die Flotte 1% der Farbstoffmischung gemäss Beispiel 1, 5% Glaubersalz kalz. und 2% 80%-iger Essigsäure. Die Färbedauer bei einer Temperatur von 98° beträgt 30-60 Minuten.

## Patentansprüche

1. Farbstoffmischungen, dadurch gekennzeichnet, dass sie mindestens einen Farbstoff der Formel 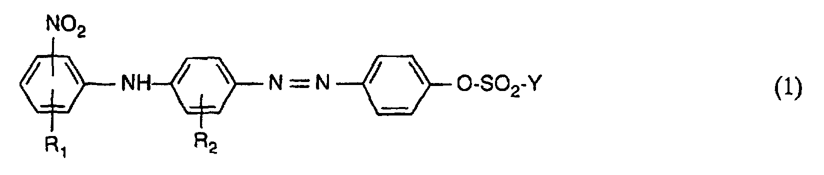 zusammen mit mindestens einem Farbstoff der Formel 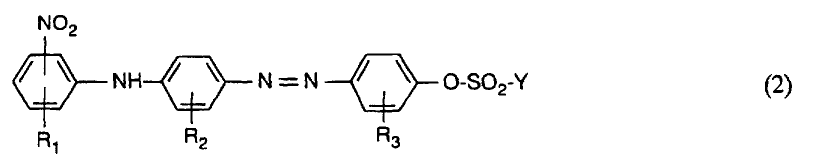 enthalten, worin
R₁ und R₂ unabhängig voneinander Wasserstoff, C₁-C₄-Alkyl, C₁-C₄-Alkoxy, C₂-C₄-Alkanoylamino, Halogen oder Sulfo bedeuten,
R₃ C₁-C₄-Alkyl, C₁-C₄-Alkoxy, C₂-C₄-Alkanoylamino, Halogen oder Sulfo und
Y C₁-C₄-Alkyl oder gegebenenfalls durch C₁-C₄-Alkyl, C₁-C₄-Alkoxy, C₂-C₄-Alkanoylamino, Halogen oder Sulfo substituiertes Phenyl oder Naphthyl ist,
wobei die Farbstoffmischungen, bezogen auf die Gesamtmenge der Farbstoffe der Formeln (1) und (2), mindestens 10 Gewichtsprozent eines oder mehrerer Farbstoffe der Formel (1) enthalten.

2. Farbstoffmischungen gemäss Anspruch 1, dadurch gekennzeichnet, dass R₁ Sulfo ist.

3. Farbstoffmischungen gemäss einem der Ansprüche 1 und 2, dadurch gekennzeichnet, dass R₂ Wasserstoff ist.

4. Farbstoffmischungen gemäss einem der Ansprüche 1 bis 3, dadurch gekennzeichnet, dass R₃ C₁-C₄-Alkyl ist.

5. Farbstoffmischungen gemäss einem der Ansprüche 1 bis 4, dadurch gekennzeichnet, dass Y gegebenenfalls durch C₁-C₄-Alkyl substituiertes Phenyl ist.

6. Farbstoffmischungen gemäss Anspruch 1, dadurch gekennzeichnet, dass R₁ Sulfo, R₂ Wasserstoff, R₃ C₁-C₄-Alkyl und Y gegebenenfalls durch C₁-C₄-Alkyl substituiertes Phenyl ist.

7. Farbstoffmischungen gemäss Anspruch 1, dadurch gekennzeichnet, dass sie mindestens einen Farbstoff der Formel 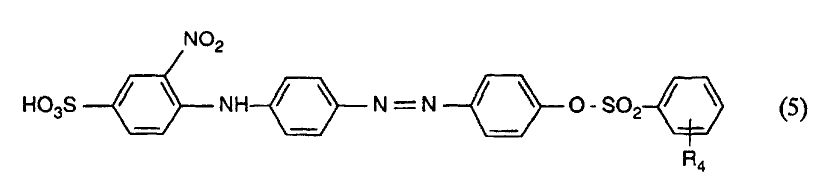 zusammen mit mindestens einem Farbstoff der Formel 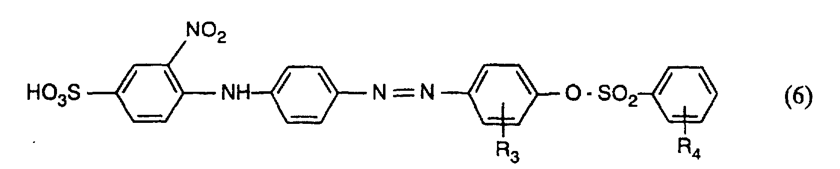 enthalten, worin
R₃ die in Anspruch 1 angegebenen Bedeutungen hat und R₄ Wasserstoff, C₁-C₄-Alkyl, C₁-C₄-Alkoxy, C₂-C₄-Alkanoylamino, Halogen oder Sulfo ist.

8. Farbstoffmischungen gemäss Anspruch 7, dadurch gekennzeichnet, dass R₃ und R₄ C₁-C₄-Alkyl, insbesondere Methyl, bedeuten.

9. Farbstoffmischungen gemäss einem der Ansprüche 1 bis 8, dadurch gekennzeichnet, dass die Farbstoffmischungen, bezogen auf die Gesamtmenge der Farbstoffe der Formeln (1) und (2), mindestens 20 Gewichtsprozent eines oder mehrerer Farbstoffe der Formel (1) enthalten.

10. Farbstoffmischungen gemäss einem der Ansprüche 1 bis 9, dadurch gekennzeichnet, dass die Farbstoffmischungen, bezogen auf die Gesamtmenge der Farbstoffe der Formeln (1) und (2), mindestens 30 Gewichtsprozent eines oder mehrerer Farbstoffe der Formel (1) enthalten.

11. Verwendung der Farbstoffmischungen gemäss einem der Ansprüche 1 bis 10 zum Färben oder Bedrucken von hydroxylgruppenhaltigem oder stickstoffhaltigem Fasermaterial.

12. Verwendung gemäss Anspruch 11 zum Färben oder Bedrucken von natürlichem oder synthetischem Polyamidfasermaterial, insbesondere von Wolle.

## Claims

1. A dye mixture, comprising at least one dye of formula 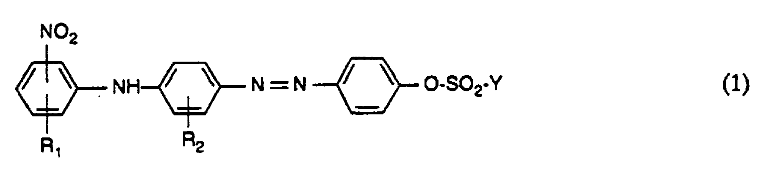 together with at least one dye of formula 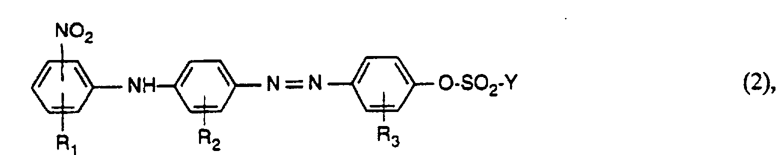 in which
R₁ and R₂ are each independently of the other hydrogen, C₁-C₄alkyl, C₁-C₄alkoxy, C₂-C₄alkanoylamino, halogen or sulfo,
R₃ is C₁-C₄alkyl, C₁-C₄alkoxy, C₂-C₄alkanoylamino, halogen or sulfo, and
Y is C₁-C₄alkyl or is phenyl or naphthyl, each of which is unsubstituted or substituted by C₁-C₄alkyl, C₁-C₄alkoxy, C₂-C₄alkanoylamino, halogen or sulfo,
which dye mixture contains at least 10 per cent by weight of one or more than one dye of formula (1), based on the total amount of the dyes of formulae (1) and (2).

2. A dye mixture according to claim 1, wherein R₁ is sulfo.

3. A dye mixture according to either claim 1 or claim 2, wherein R₂ is hydrogen.

4. A dye mixture according to any one of claims 1 to 3, wherein R₃ is C₁-C₄alkyl.

5. A dye mixture according to any one of claims 1 to 4, wherein Y is phenyl which is unsubstituted or substituted by C₁-C₄alkyl.

6. A dye mixture according to claim 1, wherein R₁ is sulfo, R₂ is hydrogen, R₃ is C₁-C₄alkyl, and Y is phenyl which is unsubstituted or substituted by C₁-C₄alkyl.

7. A dye mixture according to claim 1, comprising at least one dye of formula 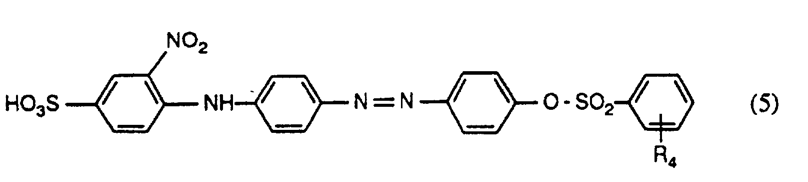 together with at least one dye of formula 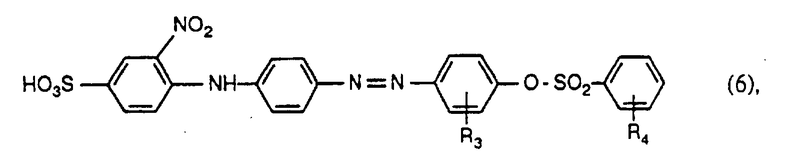 in which
R₃ has the meanings stated in claim 1 and R₄ is hydrogen, C₁-C₄alkyl, C₁-C₄alkoxy, C₂-C₄alkanoylamino, halogen or sulfo.

8. A dye mixture according to claim 7, wherein
R₃ and R₄ are C₁-C₄alkyl, especially methyl.

9. A dye mixture according to any one of claims 1 to 8, containing at least 20 per cent by weight of one or more than one dye of formula (1), based on the total amount of the dyes of formulae (1) and (2).

10. A dye mixture according to any one of claims 1 to 9, containing at least 30 per cent by weight of one or more than one dye of formula (1), based on the total amount of the dyes of formulae (1) and (2).

11. Use of the dye mixture according to any one of claims 1 to 10 for dyeing or printing hydroxyl-containing or nitrogen-containing fibre material.

12. Use according to claim 11 for dyeing or printing natural or synthetic polyamide fibre material, especially wool.

## Revendications

1. Mélanges de colorants caractérisés en ce qu'ils contiennent au moins un colorant de formule 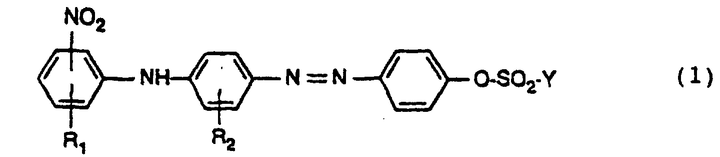 conjointement avec au moins un colorant de formule 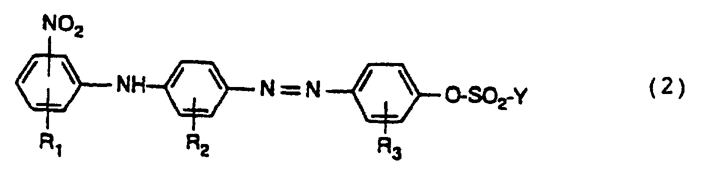 où
R₁ et R₂ représentent, indépendamment l'un de l'autre, des atomes d'hydrogène, des groupes alkyle en C₁-C₄, alkoxy en C₁-C₄, (alcanoyl en C₁-C₄)amino, halogène ou sulfo,
R₃ représente des groupes alkyle en C₁-C₄, alkoxy en C₁-C₄, (alcanoyl en C₁-C₄)amino, halogène ou sulfo, et
Y représente un groupe alkyle en C₁-C₄ ou un groupe phényle ou naphtyle éventuellement substitué par des substituants alkyle en C₁-C₄, alkoxy en C₁-C₄, (alcanoyl en C₁-C₄)amino, halogène ou sulfo,
les mélanges de colorants présentent, par rapport à la quantité totale des colorants de formules (1) et (2), une teneur d'au moins 10 % en masse en un ou plusieurs colorants de formule (1).

2. Mélanges de colorants selon la revendication 1, caractérisés en ce que R₁ représente un groupe sulfo.

3. Mélanges de colorants selon l'une des revendications 1 et 2, caractérisés en ce que R₂ représente un atome d'hydrogène.

4. Mélanges de colorants selon l'une des revendications 1 à 3, caractérisés en ce que R₃ représente un groupe alkyle en C₁-C₄.

5. Mélanges de colorants selon l'une des revendications 1 à 4, caractérisés en ce que Y représente un groupe phényle éventuellement substitué par un substituant alkyle en C₁-C₄.

6. Mélanges de colorants selon la revendication 1, caractérisés en ce que R₁ représente un groupe sulfo, R₂ représente un atome d'hydrogène, R₃ représente un groupe alkyle en C₁-C₄ et Y représente un groupe phényle éventuellement substitué par un substituant alkyle en C₁-C₄.

7. Mélanges de colorants selon la revendication 1, caractérisés en ce qu'ils contiennent au moins un colorant de formule 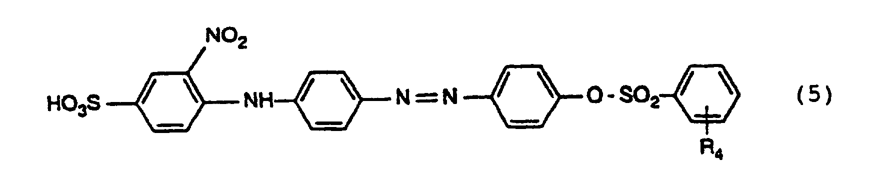 conjointement avec un colorant de formule 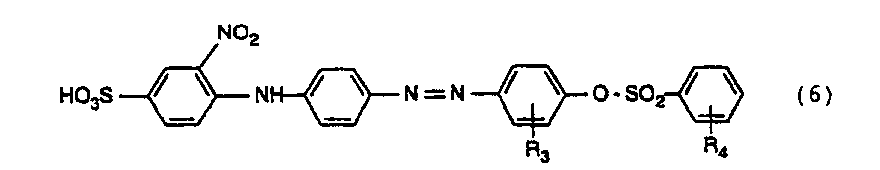 où R₃ possède les significations données à la revendication 1 et R₄ représente un atome d'hydrogène, des groupes alkyle en C₁-C₄, alkoxy en C₁-C₄, (alcanoyl en C₂-C₄)amino, halogène ou sulfo.

8. Mélanges de colorants selon la revendication 7, caractérisés en ce que R₃ et R₄ représentent un groupe alkyle en C₁-C₄, en particulier méthyle.

9. Mélanges de colorants selon l'une des revendications 1 à 8, caractérisés en ce que les mélanges de colorants contiennent, par rapport à la quantité totale des colorants de formules (1) et (2), au moins 20 % en masse d'un ou plusieurs colorants de formule (1).

10. Mélanges de colorants selon l'une des revendications 1 à 9, caractérisés en ce que les mélanges de colorants contiennent, par rapport au poids total des colorants de formules (1) et (2), au moins 30 % en masse d'un ou plusieurs colorants de formule (1).

11. Utilisation des mélanges de colorants selon l'une des revendications 1 à 10 pour la teinture ou l'impression de matières fibreuses azotées ou contenant des groupes hydroxyle.

12. Utilisation selon la revendication 11 pour la teinture ou l'impression de matière fibreuse polyamide naturelle ou synthétique, notamment de la laine.
